# FASCICULE DE BREVET EUROPEEN

(11) **EP 1 685 733 B1**
(45) Date de publication et mention de la délivrance du brevet: **09.06.2010**
(21) Numéro de dépôt: 04797898.6
(22) Date de dépôt: 15.11.2004
(51) Int. Cl.: H04W 36/14

(54) **PROCEDE DE CONTROLE DE SERVICE DE COMMUNICATION DANS UN SYSTEME DE TELECOMMUNICATION ET COMMUTATEUR ASSOCIE**
VERFAHREN ZUR STEUERUNG EINES KOMMUNIKATIONSDIENSTES IN EINEM TELEKOMMUNIKATIONSYSTEM UND DAMIT ASSOZIIERTER KOMMUTATOR
METHOD FOR CONTROLLING COMMUNICATION SERVICE IN A TELECOMMUNICATION SYSTEM AND COMMUTATOR ASSOCIATED THEREWITH

(30) Priorité: 18.11.2003 FR 0313513
(43) Date de publication de la demande: 02.08.2006
(73) Titulaire: Alcatel Lucent, 75008 Paris (FR)
(72) Inventeur: SCOTT, Frank, Pakenham, Ontario K0A 2X0 (CA); LESCUYER, Pierre, F-78180 Montigny-Le-Brettoneux (FR); CASSUTO, Philippe, F-92200 Neuilly sur Seine (FR); MARTIN, Susan, Van Alstyne, TX 75495 (US); THOMAS, Michael, Plano, TX 75025 (US); TOMATIS, Carole, F-92100 Boulogne Billancourt (FR)
(74) Mandataire: Ameline, Jean-Paul B.C.
(86) Numéro de dépôt international: PCT/EP2004/012927
(87) Numéro de publication internationale: WO 2005/051028

(56) Documents cités:
- EP-A1- 1 439 725
- WO-A-02/01902
- WO-A-02/19753
- US-A1- 2002 085 514
- ETSI: "Handover Requirements between UMTS and GSM or other Radio Systems (3G TS 22.129 version 3.2.0)" EUROPEAN TELECOMMUNICATION STANDARD, XX, XX, décembre 1999 (1999-12), pages 1-20, XP002143722

## Description

La présente invention concerne le contrôle de services de communications en mode circuit dans un système de télécommunication. Elle concerne plus particulièrement le contrôle de services de communications utilisant des codages de la parole différents, dans un système de télécommunication hétérogène.

Dans les systèmes numériques de téléphonie fixe, la parole est numérisée, encodée selon une loi classique utilisée sur les réseaux publics (notamment lois A et µ), et véhiculée par des circuits à 64 kbit/s. Lorsqu'on a affaire à des systèmes de radiocommunication, il faut généralement diminuer ce débit, en particulier sur l'interface radio. A cet effet, une fonction de compression de la parole est intégrée aux terminaux radio.

Dans certains systèmes, tels que le GSM ("Global System for Mobile communications"), qui est un système de radiocommunication de deuxième génération (2G), la parole est transportée sous forme comprimée dans le réseau d'accès radio, entre les stations de base et une unité dite TRAU ("Transcoder and Rate Adapter Unit") placée entre le réseau d'accès radio et le réseau coeur. Ce transport est habituellement effectué dans des canaux MIC à 16 kbit/s, un canal MIC correspondant par exemple à un canal de phonie à plein débit ou à deux canaux à demi-débit sur l'interface radio. L'unité TRAU assure le transcodage de la parole entre le codage loi A à 64 kbit/s et le codage plein débit ou demi-débit.

Dans d'autres systèmes, tels que l'UMTS ("Universal Mobile Telecommunication System") qui est un système de radiocommunication de troisième génération (3G), offrent des communications en mode circuit avec un débit de 64 kbit/s de bout en bout. Ceci permet notamment des communications de vidéotéléphonie (ou visiotéléphonie), qui requièrent un débit plus important que la simple téléphonie et qui ne peuvent donc être supportées dans de bonnes conditions par les systèmes de deuxième génération.

Le codage/décodage de la parole pour des communications de vidéotéléphonie ayant par exemple un débit de 64 kbit/s de bout en bout peut être opéré suivant la norme H.324, décrite dans la recommandation ITU-T H.324 comprenant l'annexe C ("multimedia téléphone terminals over error prone channels") et éventuellement l'annexe H ("mobile multilink operation"), prévoit un tel codage/décodage. La spécification technique TS 26.111, version 5.0.0, "Codec for Circuit switched Multimedia Telephony Service ; Modifications to H.324", publiée en juin 2002, par l'organisation 3GPP ("3rd Generation Partnership Project"), qui est plus spécifiquement adaptée aux terminaux UMTS, prévoit également un tel codage/décodage.

Une communication de vidéotéléphonie, c'est-à-dire mettant en oeuvre une transmission simultanée de voix et de vidéo, nécessite un débit de transmission important qui peut être offert par le système UMTS. En revanche, le système GSM s'avère généralement inapte à supporter une telle communication de vidéotéléphonie, puisque le débit maximum autorisé sur le tronçon radio de ce système est alors insuffisant.

Un problème survient dans le cas d'un système de radiocommunication hétérogène, par exemple un système de radiocommunication comprenant à la fois des équipements de deuxième génération (GSM) et des équipements de troisième génération (UMTS). En effet, un terminal sous le contrôle d'équipements 3G, peut mettre en oeuvre une communication de vidéotéléphonie. En revanche, la communication devient irréalisable lorsque le terminal passe sous le contrôle d'équipements 2G, par exemple à la suite d'un déplacement du terminal vers une zone où aucun équipement 3G n'est disponible. Il s'ensuit une coupure de la communication de vidéotéléphonie particulièrement frustrante pour l'usager impliqué dans cette communication.

Le document WO 02/19753 décrit un procédé de reconfiguration de lien de communication dans un système de communication comprenant système de radiocommunication pouvant être hétérogène. WO02/19753 A1 décrit un changement de cellule dans lequel la qualité de service fournie dans la cellule destination est différente de la qualité de service dans la cellule source. Les caractéristiques du service s'adaptent à la nouvelle qualité de service en adaptant par exemple un nouveau codec

Un but de la présente invention est de limiter les inconvénients exposés ci-dessus, en proposant une continuité au moins partielle de la communication, par exemple pour sa partie vocale, à l'intérieur d'un système hétérogène.

Un autre but de l'invention est de proposer un changement de service apte à conserver la partie vocale d'une communication de vidéotéléphonie, lors d'un transfert de la communication entre des équipements de radiocommunication de génération différente.

Un autre but de l'invention est de proposer un changement de service apte à conserver la partie vocale seulement d'une communication de vidéotéléphonie, lors d'un transfert de la communication entre des équipements de radiocommunication de génération différente, sans dégradation excessive de la qualité de la communication vocale lors du transfert.

L'invention propose ainsi un procédé de contrôle de service de communication tel que revendiqué à la revendication 1.

Ainsi, un changement de service sera effectué avant l'exécution du transfert de la communication, de façon à permettre un repli vers un mode de fonctionnement supporté par le second sous-système, de façon anticipée.

Le premier sous-système peut par exemple être de troisième génération, tandis que le second sous-système est de deuxième génération. En outre, le premier service de communication peut être un service de vidéotéléphonie, tandis que le second service de communication est un service de communication vocale. Dans ces conditions, la composante vidéo de la communication sera stoppée avant le transfert de la communication vers le sous-système 2G, tandis que la composante audio sera conservée. Il s'ensuit une certaine continuité de la communication, qui n'aurait pas pu être assurée si le changement de service n'avait pas été effectué avant l'exécution du transfert de la communication.

De façon avantageuse, un changement de codage accompagne le changement de service de communication, le nouveau codage étant choisi pour permettre la mise en oeuvre du second service de communication et pour être supporté par le second sous-système. A titre d'exemple, le codage associé au premier de communication est compatible avec le standard H.324, et le codage associé au second de communication est de type AMR ("Adaptive Multi Rate").

Le contrôleur de réseau radio du premier sous-système, recevant un message d'échec de transfert, relayé depuis le commutateur auquel il est relié, tentera avantageusement à nouveau de déclencher la procédure de transfert de la communication en informant le commutateur de la détection persistante d'une condition de transfert de cette communication. Tant que la procédure de changement de service n'est pas achevée, un message d'échec de transfert sera transmis au contrôleur de réseau radio. Lorsque la procédure de changement de service est achevée, le transfert de la communication pourra alors se poursuivre normalement, sans risque d'échec du fait du changement préalable de service pour la communication.
- L'invention propose également un commutateur de réseau coeur tel que revendiqué à la revendication 14.

D'autres particularités et avantages de la présente invention apparaîtront dans la description ci-après d'exemples de réalisation non limitatifs, en référence aux dessins annexés, dans lesquels :
- la figure 1 est un schéma simplifié d'un exemple d'architecture pour un système de télécommunication dans lequel l'invention peut être mise en oeuvre ;
- la figure 2 est une représentation d'un échange de signalisation mis en oeuvre dans le cadre de l'invention ; et
- la figure 3 est une représentation d'un échange de signalisation mis en oeuvre dans le cadre de la procédure de changement de service utilisée selon l'invention.

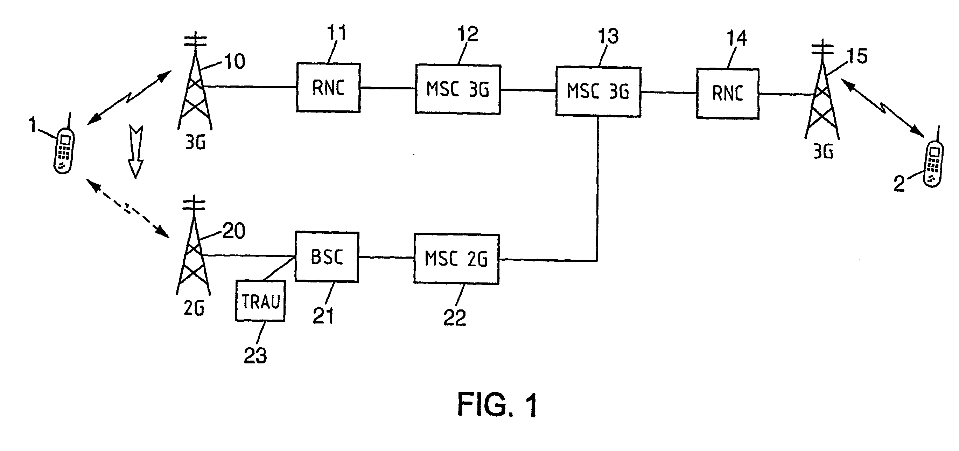

La figure 1 montre une architecture schématique d'un système de télécommunication dans lequel l'invention peut être mise en oeuvre. Les terminaux radio 1 et 2 sont des terminaux mobiles supportant le système de radiocommunication de troisième génération UMTS. Une communication entre ces deux terminaux se fait de façon avantageuse par l'intermédiaire d'équipements 3G, dont une partie au moins forme un sous-système du système de télécommunication. Ce sous-système comprend un réseau d'accès radio avec au moins une station de base 3G 10 avec laquelle le terminal 1 communique selon une interface radio, ainsi qu'un contrôleur de réseau radio (ou RNC, pour "Radio Network Controler") 11 contrôlant la station de base 10 et la communication impliquant le terminal mobile 1. Le RNC 11 est en outre relié à au moins un commutateur 3G (ou MSC, pour "Mobile-service Switching Center") 12 de réseau coeur.

Une communication a lieu entre un terminal mobile 1, autrement appelé UE ("User Equipment"), et un terminal 2. Lorsque le terminal 2 est lui aussi un terminal mobile (UE 2), la communication est alors acheminée par d'autres équipements 3G, du côté de l'UE 2, tel qu'un commutateur MSC 13, un RNC 14 relié au MSC 13 et contrôlant une station de base 3G 15 avec laquelle l'UE 2 est en liaison.

On se place ci-après, à titre illustratif, dans le cas d'une communication point à point entre les deux UE 1 et 2, bien qu'il puisse être également envisageable d'avoir une communication impliquant un plus grand nombre de terminaux, par exemple l'UE 1 et au moins deux autres terminaux. La communication envisagée par la suite s'effectue en mode circuit, c'est-à-dire qu'un circuit est réservé aux échanges entre les UE, par l'intemédiaire des équipements 3G.

Par ailleurs, les UE 1 et 2 possèdent, comme indiqué en introduction, une pile protocolaire apte à supporter un codage des trames de communication échangées. Le codage réalisé peut dépendre du débit souhaité et d'une qualité de service souhaitée. Il peut dépendre également du type de service à mettre en oeuvre lors de la communication. Lorsque le service de communication envisagé est un service de vidéotéléphonie, c'est-à-dire comportant une transmission vidéo et une transmission audio simultanées, le codage choisi doit alors permettre un débit de transmission élevé pour autoriser l'acheminement rapide d'une grande quantité d'informations. En revanche, lorsque le service est une communication vocale, le codage peut être choisi de façon à obtenir un débit de transmission plus faible.

Un exemple de suite protocolaire autorisant un codage des communications et pouvant être utilisé par les UE pour communiquer par l'intermédiaire du système UMTS, est le standard H.324 conforme à la recommandation ITU-T H.324 comprenant l'annexe C ("multimedia telephone terminalsover error prone channels") et éventuellement l'annexe H ("mobile multilink operation"), ou de façon plus spécifique, le standard décrit dans la spécification technique TS 26.111, version 5.0.0, "Codec for Circuit switched Multimedia Telephony Service ; Modifications to H.324", publiée en juin 2002, par le 3GPP. Ce dernier standard est une adaptation de la suite protocolaire H.324 au système de communication UMTS. Pour des raisons de simplicité, on utilisera ci-après la notation H.324 pour désigner la suite protocolaire appliquée au système UMTS.

L'établissement d'une communication de vidéotéléphonie entre l'UE 1 et l'UE 2 se fait conformément aux procédures prévues à la section 5.3.6 de la spécification technique TS 24.008, version 5.9.0, "Mobile radio interface Layer 3 specification ; Core network protocols ; Stage 3 (Release 5)", publiée par le 3GPP en septembre 2003. Ainsi, lorsque l'UE 1 souhaite établir une communication de vidéotéléphonie avec l'UE 2, il transmet un message SETUP d'établissement au MSC 12 (par l'intermédiaire de la station de base 10 et le RNC 11). Ce message SETUP indique que l'UE 1 supporte deux modes de fonctionnement possible ("Bearer capability IE" ou "BC IE"), l'un pour mettre en oeuvre un service de vidéotéléphonie, l'autre pour mettre en oeuvre un service de communication vocale. Le message SETUP contient en outre un paramètre "Repeat Indicator" réglé à la valeur "support of service change and fallback". Cela signifie que l'UE 1 est apte à supporter un changement de service, et en particulier le passage d'un service de vidéotéléphonie à un service de communication vocale.

Le MSC 12 répond alors à l'UE 1 par un message CALL PROCEEDING incluant une indication sur la capacité de l'UE 2. Si les deux mêmes modes de fonctionnement (BC) sont rapportés dans le message CALL PROCEEDING, cela revient à accepter les types de service de communication demandés par l'UE 1, à savoir, dans cet exemple, de la vidéotéléphonie ou de la parole. Si un seul BC est inclus dans le message CALL PROCEEDING, seul un des deux services de communication supportés par l'UE 1 pourra être mis en oeuvre, par exemple un service de communication vocale.

Le même type de signalisation est mis en oeuvre entre le MSC 13 et l'UE 2. Ces procédures d'établissement d'appel sont également détaillées dans la spécification technique TS 23.172, version 5.2.0, "Technical realization of Circuit Switched (CS) multimedia service UDI/RDI fallback and service modification ; Stage 2 (Release 5)", publiée en septembre 2003 par le 3GPP.

On considère désormais que l'UE 1 a établi une communication de vidéotéléphonie en mode circuit avec l'UE 2, selon les procédures d'établissement décrites ci-dessus. Une telle communication nécessite un débit de transmission de 64 kbit/s de bout en bout. En effet, le service de vidéotéléphonie se traduit par une transmission d'un grand nombre de données du fait de la présence d'une transmission vidéo et une transmission audio simultanées. Dans ce cas, aucun transcodage visant à réduire le débit utile n'est effectué entre les UE 1 et 2, en particulier dans le réseau coeur du système de télécommunication. Une telle communication est supportée par le sous-système 3G représenté en partie supérieure de la figure 1, comme expliqué plus haut.

La communication de l'UE 1 avec l'UE 2 se fait notamment par l'intermédiaire de l'interface radio située entre l'UE 1 et la station de base 10. Le RNC 11 contrôle les ressources radio notamment pour l'UE 1, selon le protocole RRC ("Radio Resource Control") décrit dans la spécification technique TS 125 331, V5.6.0, publiée en septembre 2003 par le 3GPP. En particulier, le RNC 11 est chargé de détecter l'apparition de certaines conditions radio sur le lien radio entre l'UE 1 et la station de base 10, de façon à déclencher une procédure de transfert de la communication sur d'autres ressources de communication, dite procédure de "handover".

On notera que le handover peut être un "hard handover" qui procède par basculement instantané de la communication de la station de base d'une première vers celle d'une seconde, ou bien un "soft handover" dans lequel il existe une phase plus ou moins longue où le mobile communique simultanément avec les stations de base. Dans le cas du soft handover, le RNC 11 maintient et met à jour un ensemble actif de stations de base avec lesquelles l'UE 1 est en communication à un moment donné. Le soft handover consiste alors à ajouter et/ou à supprimer des stations de base à cet ensemble actif.

En vue d'exécuter la procédure de handover, l'UE 1 et la station de base 10 effectuent des mesures radio, qui incluent par exemple des niveaux de champ sur les liens montant et descendant entre l'UE 1 et la station de base 10, des niveaux de champ sur les liens descendants depuis des stations voisines de la station de base 10, comme la station de base 20 par exemple, ainsi que d'autres types de mesure, par exemple relatives à la qualité des liens montant et descendant entre l'UE 1 et la station de base 10 (voir section 8.4 de la TS 125 331 précitée).

Un RNC déclenche classiquement une procédure de handover lorsque les mesures rapportées au RNC par l'UE et la station de base concernés indiquent qu'une condition de transfert est remplie, par exemple parce que le lien courant entre l'UE et la station de base a un niveau de champ trop faible ou a une qualité estimée trop mauvaise. Le RNC décide par ailleurs, sur la base des mesures qui lui ont été rapportées, de la station de base apte à reprendre la communication après le transfert (ou à être ajoutée à l'ensemble actif dans le cas d'un soft handover).

Dans l'exemple illustré à la figure 1, on considère que le RNC 11 détecte une condition de transfert de la communication depuis la station de base 10 qui est un équipement 3G, vers la station de base 20 qui est un équipement 2G. Cela peut se produire par exemple lorsque l'UE 1 était initialement à proximité de la station de base 10, puis se rapproche de la station de base 20 : le niveau de signal reçu de la station de base 10 s'affaiblit alors, tandis que celui reçu de la station de base 20 devient prépondérant.

La station de base 20 est un équipement 2G. Un transcodage est effectué par une entité TRAU ("Transcoder and Rate Adaptation Unit") 23 située entre la station de base 20 et le MSC 2G 22, par exemple au niveau du BSC ("Base Station Controller") 21 contrôlant la station de base 20. Ce transcodage fait correspondre à un flux d'informations à 64 kbit/s tel qu'il existe notamment dans la portion du réseau coeur à partir du MSC 2G 22, un flux ayant un débit inférieur à 16 kbit/s sur la partie radio du sous-système 2G pour pouvoir être transporté sur un canal MIC à 16 kbit/s. En particulier, les échanges sur l'interface radio impliquant la station de base 20 sont effectués avec un débit utile de 9,6 kbit/s.

Lorsque la fonctionnalité HSCSD ("High Speed Circuit Switched Data") est implémentée dans la portion de réseau à laquelle la station de base 20 appartient, ce débit utile peut être porté à 14,4 kbit/s, voire au-delà lorsque plusieurs intervalles de temps sont utilisés sur l'interface radio pour une même communication (on peut alors atteindre un débit utile allant jusqu'à 57,6 kbit/s lorsque quatre intervalles de temps sont utilisés).

La communication de vidéotéléphonie qui a lieu sur le sous-système 3G a, quant à elle, un débit de 64 kbit/s, comme cela a été expliqué plus haut. Un transfert de la communication vers le sous-système 2G comprenant la station de base 20 n'est donc pas envisageable, puisque le débit offert ne peut subvenir au besoin de la communication de vidéotéléphonie.

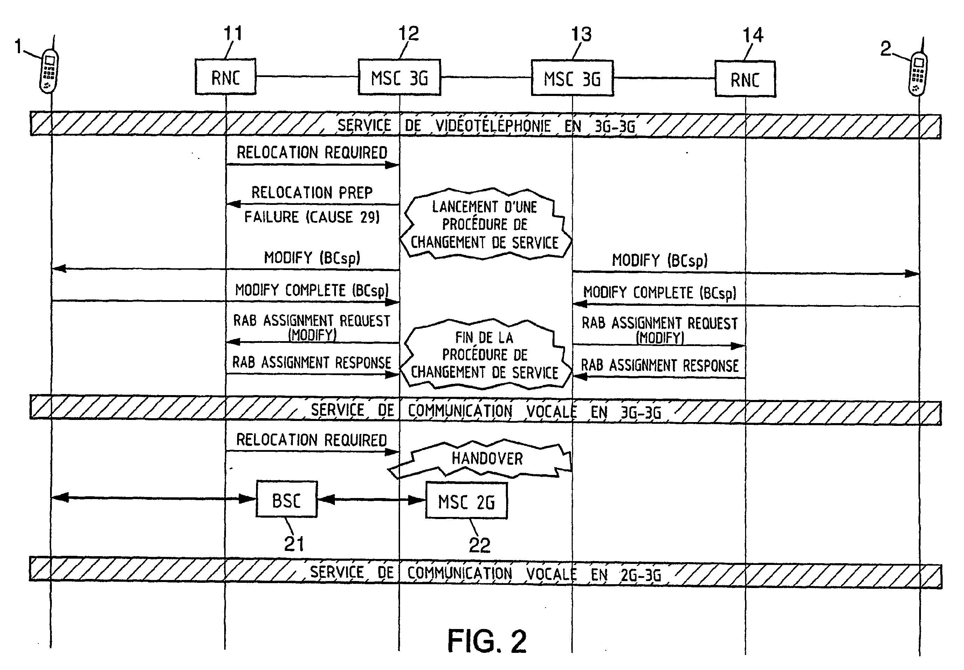

En pratique, le déclenchement de la procédure de handover, suite à la détection d'une condition de transfert de la communication de la station de base 10 à la station de base 20, se traduit par l'envoi d'un message de requête de la part du RNC 11 au MSC 12 ("Relocation required" sur la figure 2). Une fois la requête retransmise par le MSC 3G 12 (éventuellement via un MSC 3G intermédiaire) au MSC 2G 22 qui est relié au BSC 21 ("Prep_handover req"), un message d'échec ("Prep_handover failure") est retourné du MSC 2G 22 au MSC 3G 12 (voir section 8.4 de la spécification technique TS 129 002, version 5.7.0, "Mobile Application Part (MAP) specification", publiée en septembre 2003 par le 3GPP). Le MSC 12 répond à la requête de handover émise par le RNC 11 par un message d'échec ("Relocation Prep failure" sur la figure 2), relayant le message d'échec qu'il a lui-même reçu, avec la cause 29, c'est-à-dire "Relocation Failure in Target CN/RNC or Target System" (voir section 8.6 de la spécification technique TS 125 413, version 5.6.0, "UTRAN lu interface Radio Access Network ; Application Part (RANAP) signalling", publiée en septembre 2003, par le 3GPP).

Une fois l'échec de handover constaté, par exemple dès la réception par le MSC 3G 12 d'un message d'échec issu du MSC 2G 22, ou dès la transmission au RNC 11 d'un message d'échec "Relocation Prep failure" par le MSC 3G 12, le réseau coeur déclenche alors une procédure visant à modifier le service de communication, de manière à passer d'un service de vidéotéléphonie à un service de communication vocale.

Un tel changement de service implique un changement du codec, c'est-à-dire du mode de codage/décodage mis en oeuvre dans le réseau coeur, et, de façon correspondante, au niveau des UE 1 et 2. Le codage de la parole pour une communication vocale autorise en effet avantageusement un débit de transmission bien inférieur à celui autorisé par un codage pour une communication de vidéotéléphonie.

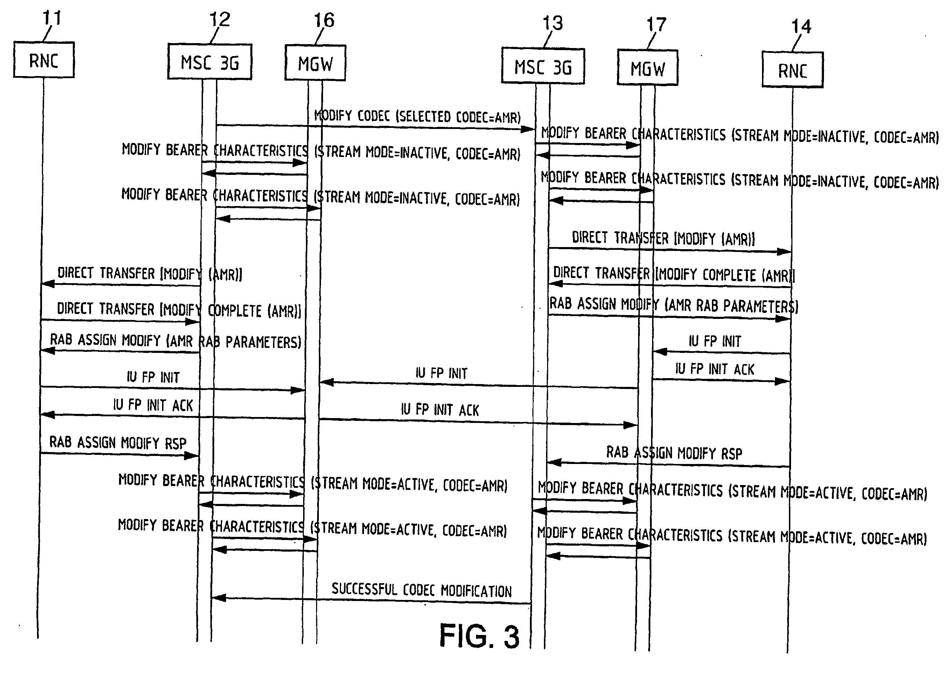

La figure 3 montre un exemple de signalisation mise en oeuvre dans le cadre de la procédure de changement de service initiée par le MSC 12, après l'échec du handover 3G vers 2G requis par le RNC 11.

Ainsi, le MSC 3G 12, qui se trouve du côté de l'UE 1, envoie une commande de changement de codec au MSC 3G 13, qui se trouve du côté de l'UE 2. Cette commande ("Modify codec" sur la figure 3) inclut le codec sélectionné pour poursuivre la communication. Dans l'exemple illustré, on utilise de préférence un codec de type AMR ("Adaptive Multi Rate") pour coder la communication vocale. Les codecs AMR utilisent huit modes différents avec des débits binaires allant de 12,2 kbit/s à seulement 4,75 kbit/s. Le codage s'opère sur des trames de parole de 20 ms correspondant à 160 échantillons à une fréquence d'échantillonnage de 8000 échantillon/s. Le schéma de codage utilisé est appelé ACELP ("Algebraic Code Excited Linear Prediction Coder"). Un autre exemple de codec audio est le G.723.1 standardisé par l'ITU. Il propose deux débits binaires : 5,3 et 6,3 kbit/s. Il code la parole ou d'autres signaux audio dans des trames de 30 ms.

Par ailleurs, des plateformes de média MGW ("Media Gateway") 16 et 17 sont présentes dans le réseau coeur. Ce sont elles qui assurent et contrôlent un codage/décodage des flux qui y transitent. Le codage/décodage des flux peut être différent sur les deux portions de réseau qui sont se situent de part et d'autre d'une telle plateforme MGW (voir la section 5.3 de la spécification technique TS 123 153, version 5.6.0, "Out of Band Transcoder Control, Stage 2" publiée en septembre 2003 par le 3GPP). Ce mode de fonctionnement assure le transcodage entre deux types de codec.

Après émission de la commande de changement de codec du MSC 12 au MSC 13, un échange de signalisation est effectué entre le MSC 12 et le MGW 16 auquel il est relié, ainsi qu'entre le MSC 13 et le MGW 17 auquel il est relié. Cet échange de signalisation (procédure "Modify Bearer Characteristics" sur la figure 3) permet de rendre les flux inactifs pendant la procédure de changement de service, de manière à éviter la génération de messages d'erreurs au niveau des MGW 16 et 17, du fait d'une éventuelle incohérence des codages utilisés de part et d'autre pendant cette période transitoire. A l'occasion de cet échange de signalisation, les MGW 16 et 17 sont informés du nouveau codec à adopter pour la suite de la communication, à savoir un codec de type AMR dans l'exemple illustré sur la figure 3. Lors de cette étape, les caractéristiques du support de la communication (bearer) sont modifiées conformément au changement de service envisagé.

Les RNC 11 et 14 sont ensuite informés par les MSC 12 et 13 respectivement, du codec sélectionné dans le cadre de la procédure de changement de codec (message "Direct Transfer" sur la figure 3). Ils acquittent ensuite la prise en compte de cette information (message "Direct Transfer Complete" sur la figure 3).

On notera que le RNC 14 peut rejeter une demande de changement de codec, par exemple parce que le codec sélectionné n'est pas supporté sur le segment radio s'étendant du RNC 14 à l'UE 2. Dans ce cas, le RNC 14 renvoie alors un message de rejet ("Direct Transfer [Modify Reject (AMR)]"), provoquant une nouvelle modification des caractéristiques du support de la communication, négociée entre le MSC 13 et le MGW 17, pour revenir à un codec de vidéotéléphonie. Un message d'échec du changement de codec est alors transmis du MSC 13 au MSC 12 ("Codec Modification Failure"). Puis le codec de vidéotéléphonie est également rétabli sur le segment s'étendant entre l'UE 1 et le MGW 16. Ainsi, aucun changement de service n'est effectué pour la communication, dans ce cas.

Lorsqu'un message "Direct Transfer Complete" est reçu aux MSC 12 et 13, chaque MSC indique au RNC correspondant (11 ou 14 respectivement) que le support radio (ou RAB, "Radio Access Bearer") correspondant de la communication doit être modifié pour prendre en compte le changement de codec (message "RAB Assign Modify" sur la figure 3). Un échange de signalisation a également lieu sur l'interface lu dans le cadre de la modification du RAB, entre le MGW 16 et le RNC 11, le MGW 17 et le RNC 14, ainsi qu'entre les MGW 16 et 17. A l'issue de cet échange sur l'interface lu, chaque RNC acquitte l'indication de modification du RAB correspondant (message "RAB Assign Modify Rsp" sur la figure 3).

Par la suite, un nouvel échange de signalisation est effectué entre le MSC 12 et le MGW 16 auquel il est relié, ainsi qu'entre le MSC 13 et le MGW 17 auquel il est relié. Cet échange de signalisation (procédure "Modify Bearer Characteristics" sur la figure 3) permet de rendre les flux à nouveau actifs.

Enfin, à l'issue des étapes précédentes, un message d'acquittement est transmis du MSC 13 au MSC 12 pour lui confirmer le succès du changement de codec ("Succesful Codec Modification" sur la figure 3). Ce message annonce la fin de la procédure de changement de service. Dans l'exemple illustré sur les figures 2 et 3, la communication entre l'UE 1 et l'UE 2, qui était initialement une communication de vidéotéléphonie, est alors réduite à une communication vocale utilisant un codec audio, de type AMR, sur les tronçons de réseau se situant entre un MGW et l'UE correspondant. La communication vocale ainsi codée a alors un débit allant de 12,2 kbit/s à seulement 4,75 kbit/s, selon le mode de codec AMR utilisé. On considère par la suite que le codage AMR utilisé est supporté par le sous-système 2G, c'est-à-dire qu'il fournit un débit utile inférieur à 9,6 kbit/s sur l'interface radio.

Dans un mode de réalisation avantageux de l'invention, le RNC 11 qui a reçu un message d'échec du transfert de la communication vers une station de base du réseau d'accès radio du sous-système 2G, fait ultérieurement une nouvelle tentative de requête de transfert de la communication (message "Relocation required" sur la figure 2). Le MSC 12 renvoie alors avantageusement un nouveau message d'échec au RNC 11 tant que la procédure de changement de service n'est pas achevée. Ainsi de nombreuses nouvelles tentatives de requête de transfert de la communication peuvent être effectuées par le RNC 11.

Lorsque la procédure de changement de service est achevée, c'est-à-dire lorsque la communication en cours entre l'UE 1 et l'UE 2 est passée d'un service de vidéotéléphonie à un simple service de voix, une nouvelle tentative de requête de transfert de la communication du RNC 11 à destination du MSC 12 permet alors la mise en oeuvre du transfert de la communication du sous-système 3G au sous-système 2G représenté sur la figure 1 (procédure classique de handover 3G vers 2G).

A l'issue de cette procédure de handover, la communication entre l'UE 1 et l'UE 2 est acheminée à travers le sous-système 2G représenté en partie inférieure de la figure 1, c'est-à-dire par l'intermédiaire de la station de base 2G 20, du BSC 21 et également du MSC 2G 22. Les équipements 3G, tels que le MSC 13, le RNC 14 et la station de base 15 peuvent en outre continuer à acheminer la communication vers l'UE 2. Si le MSC 2G 22 n'est pas directement relié au MSC 3G 13, la communication peut alors transiter par un ensemble de MSC reliant indirectement ces deux MSC.

La procédure de handover réussit dans ce cas, car un changement de service a été effectué préalablement, permettant ainsi de réduire le débit de la parole à une valeur acceptable pour le sous-système 2G, c'est-à-dire inférieure à 9,6 kbit/s sur l'interface radio. En particulier, le même codec AMR est alors utilisé aux deux extrémités de la chaîne de transmission, assurant ainsi une cohérence dans le codage/décodage de la parole. La composante vocale de la communication est alors maintenue après le transfert de la communication.

La continuité de service pour la composante vocale de la communication est en outre effectuée sans dégradation sensible de sa qualité, puisque le changement de codec a été réalisé en amont du transfert de la communication et dès qu'une condition de transfert de la communication a été détectée.

On peut noter que lorsque le transfert de la communication désigne un soft handover, le changement de service peut être réalisé comme décrit ci-dessus dès lors qu'une station de base 2G (par exemple la station de base 20) a été ajoutée à l'ensemble actif tenu à jour pour l'UE 1.

Un changement de service inverse (voix -> vidéotéléphonie) peut être réalisé selon l'invention, lorsque la communication est susceptible d'être transférée d'une zone où tous les équipements sont en 2G à une zone où des équipements 3G sont présents. Un codec approprié est alors choisi en remplacement du codec audio initial, pour passer de la composante vocale seule de la communication à la communication de vidéotéléphonie complète.

Dans un mode de réalisation avantageux de l'invention, on tire profit de la bande passante non utilisée par l'information codée transmise sur le circuit de communication du sous-système 2G. De cette façon, si le codec audio utilisé après transfert de la communication fournit un débit inférieur au débit utile maximum autorisé sur la partie radio du GSM, à savoir 9,6 kbit/s, par exemple si l'on utilise un codec AMR à 4,75 kbit/s, les 4,85 kbit/s (=9,6 - 4,75) restants pourront être mis à profit pour transmettre des données en complément de la communication vocale en cours.

## Revendications

1. Procédé de contrôle de service de communication dans un système de télécommunication comprenant un premier et un second sous-systèmes comportant chacun un réseau d'accès radio comprenant des stations de base (10, 20) et au moins un contrôleur de réseau radio (11, 21) relié à certaines au moins desdites stations de base et à au moins un commutateur (12, 22) de réseau coeur,
le premier sous-système étant apte à supporter un premier service de communication de deux composantes dont au moins une composante audio et un second service de communication d'une composante audio, et le second sous-système étant apte à supporter le second service de communication, ledit procédé comprenant les étapes suivantes, relativement à un premier terminal mobile (1) ayant une communication en cours avec un second terminal (2) selon le premier service de communication, par l'intermédiaire au moins d'au moins une station de base (10) du réseau d'accès radio du premier sous-système :
- détecter, au contrôleur de réseau radio (11) du premier sous-système une condition de transfert de la communication vers au moins une station de base (20) du réseau d'accès radio du second sous-système ;
- informer le commutateur (12) de réseau coeur auquel est relié le contrôleur de réseau radio (11) du premier sous-système de ladite détection d'une condition de transfert de la communication ;
- lorsque le second sous-système n'est pas apte à traiter la communication selon le premier service de communication des deux composantes, requérir un changement de service afin que ladite communication soit poursuivie selon le second service de communication pour la composante audio,
et ledit procédé étant **caractérisé en ce que,**
le contrôleur de réseau radio (11) du premier sous-système étant relié à au moins un premier commutateur (12) de réseau coeur et le contrôleur de réseau radio (21) du second sous-système étant relié à au moins un second commutateur (22) de réseau coeur, après avoir informé le premier commutateur de ladite détection d'une condition de transfert de la communication, on transmet une demande de transfert de la communication du premier commutateur au second commutateur, et **en ce que** la non aptitude du second sous-système à traiter la communication selon le premier service de communication est indiquée au premier commutateur par un message d'échec du transfert, envoyé en réponse à ladite transmission de la demande de transfert de la communication.

2. Procédé selon la revendication 1, dans lequel le premier sous-système est de troisième génération et le second sous-système est de deuxième génération.

3. Procédé selon l'une quelconque des revendications précédentes, dans lequel le premier service de communication nécessite un débit de transmission supérieur au second service de communication.

4. Procédé selon l'une quelconque des revendications précédentes, dans lequel à chaque service de communication est associé un codage sur un tronçon au moins de la communication et dans lequel la requête de changement de service comprend une requête de changement du codage sur ledit tronçon de la communication.

5. Procédé selon la revendication 4, dans lequel le codage associé au premier service de communication est compatible avec le standard H.324.

6. Procédé selon l'une quelconque des revendications précédentes, dans lequel le premier service de communication est un service de vidéotéléphonie.

7. Procédé selon l'une quelconque des revendications précédentes, dans lequel le second service de communication est un service de communication vocale.

8. Procédé selon la revendication 7, dans lequel un codage de type AMR ("Adaptive Multi Rate") est associé au second service de communication.

9. Procédé selon l'une quelconque des revendications 1 à 8, dans lequel ledit message d'échec du transfert est envoyé au premier commutateur (12) de réseau coeur et est relayé au contrôleur de réseau radio (11) du premier sous-système, et dans lequel l'étape consistant à informer le premier commutateur de la détection au contrôleur de réseau radio du premier sous-système d'une condition de transfert de la communication vers au moins une station de base (20) du réseau d'accès radio du second sous-système, est répétée tant qu'un message d'échec du transfert est relayé au contrôleur de réseau radio (11) du premier sous-système.

10. Procédé selon l'une quelconque des revendications précédentes, dans lequel, lorsque le second service de communication nécessite un débit strictement inférieur sur une partie radio à une valeur de débit maximale autorisée par le second sous-système, on utilise le débit complémentaire pour transmettre des données par l'intermédiaire au moins de ladite station de base (20) du réseau d'accès radio du second sous-système.

11. Procédé selon l'une quelconque des revendications précédentes, dans lequel la requête de changement de service est transmise au premier terminal mobile (1) et au second terminal (2).

12. Procédé selon la revendication 11, dans lequel la requête de changement de service est transmise au second terminal (2) par l'intermédiaire d'au moins un commutateur (13), un contrôleur de réseau radio (14) et une station de base (15) avec laquelle le second terminal est en liaison.

13. Procédé selon l'une quelconque des revendications précédentes, dans lequel la requête de changement de service comprend une requête de modification de caractéristiques de supports radio de la communication respectivement du côté du premier terminal mobile (1) et du second terminal (2).

14. Commutateur (12) de réseau coeur d'un système de télécommunication comprenant en outre un premier et un second sous-systèmes comportant chacun un réseau d'accès radio comprenant des stations de base (10, 20) et au moins un contrôleur de réseau radio (11, 21) relié à certaines au moins desdites stations de base, certains au moins des contrôleurs de réseau radio (11) étant en outre reliés au moins audit commutateur (12) de réseau coeur, le premier sous-système étant apte à supporter un premier service de communication de deux composantes dont au moins une composante audio et un second service de communication d'une composante audio, et le second sous-système étant apte à supporter le second service de communication, ledit commutateur (12) de réseau coeur comprenant, relativement à un premier terminal mobile (1) ayant une communication en cours avec un second terminal (2) selon le premier service de communication, par l'intermédiaire au moins d'au moins une station de base (10) du réseau d'accès radio du premier sous-système :
- des moyens pour recevoir une indication selon laquelle une condition de transfert de la communication vers au moins une station de base (20) du réseau d'accès radio du second sous-système a été détectée au contrôleur de réseau radio (11) du premier sous-système ; et
- des moyens, lorsque le second sous-système n'est pas apte à traiter la communication selon le premier service de communication des deux composantes, pour requérir un changement de service afin que ladite communication soit poursuivie selon le second service de communication pour la composante audio,
ledit commutateur (12) de réseau coeur étant **caractérisé en ce que**, le contrôleur de réseau radio (11) du premier sous-système étant relié au moins audit commutateur (12) de réseau coeur et le contrôleur de réseau radio (21) du second sous-système est relié à au moins un second commutateur (22) de réseau coeur, il comprend en outre des moyens, en réaction à la réception d'une indication selon laquelle une condition de transfert de la communication a été détectée, pour transmettre une demande de transfert de la communication au second commutateur (22), et des moyens pour déduire la non aptitude du second sous-système à traiter la communication selon le premier service de communication, de la réception d'un message d'échec du transfert, en réponse à ladite transmission de la demande de transfert de la communication.

15. Commutateur (12) selon la revendication 14, dans lequel le premier sous-système est de troisième génération, le second sous-système étant de deuxième génération.

16. Commutateur (12) selon l'une quelconque des revendications 14 à 15, dans lequel le premier service de communication nécessite un débit de transmission supérieur au second service de communication.

17. Commutateur (12) selon l'une quelconque des revendications 14 à 16, dans lequel à chaque service de communication est associé un codage sur un tronçon au moins de la communication et dans lequel les moyens pour requérir un changement de service comprennent des moyens pour requérir un changement du codage sur ledit tronçon de la communication.

18. Commutateur (12) selon la revendication 17, dans lequel le codage associé au premier service de communication est compatible avec le standard H.324.

19. Commutateur (12) selon l'une quelconque des revendications 14 à 18, dans lequel le premier service de communication est un service de vidéotéléphonie.

20. Commutateur (12) selon l'une quelconque des revendications 14 à 19,dans lequel le second service de communication est un service de communication vocale.

21. Commutateur (12) selon la revendication 20, dans lequel un codage de type AMR ("Adaptive Multi Rate") est associé au second service de communication.

22. Commutateur (12) selon l'une quelconque des revendications 14 à 21, comprenant en outre des moyens pour relayer ledit message d'échec du transfert au contrôleur de réseau radio (11) du premier sous-système.

23. Commutateur (12) selon l'une quelconque des revendications 14 à 22, dans lequel les moyens pour requérir un changement de service comprennent des moyens pour transmettre une requête de changement de service du premier au second service de communication au premier terminal mobile (1) et au second terminal (2).

24. Commutateur (12) selon la revendication 23, dans lequel les moyens pour transmettre une requête de changement de service au second terminal (2) sont mis en oeuvre par l'intermédiaire d'au moins un commutateur (13), un contrôleur de réseau radio (14) et une station de base (15) avec laquelle le second terminal (2) est en liaison.

25. Commutateur (12) selon l'une quelconque des revendications 14 à 24, dans lequel les moyens pour requérir un changement de service comprennent des moyens pour requérir une modification de caractéristiques d'au moins un support radio de la communication.

## Claims

1. A communication service control method in a telecommunication system including a first and second subsystem, each comprising a radio access network including base stations (10, 20) and at least one radio network controller (11, 21) connected to at least some of said base stations and to at least one core network switch (12, 22),
the first subsystem being adapted for supporting a first communication service of two components, including at least one audio component and a second communication service of an audio component, and the second subsystem being adapted for supporting the second communication service, said method including the following steps, in relation to a first mobile terminal (1) being in communication with a second terminal (2) according to the first communication service, via at least one base station (10) of the radio access network of the first subsystem:
- detecting, at the radio network controller (11) of the first subsystem, a condition for transfer of the communication to at least one base station (20) of the radio access network of the second subsystem;
- informing the core network switch (12) to which the radio network controller (11) of the first subsystem is connected of said detection of a communication transfer condition;
- when the second subsystem is not able to handle the communication according to the first communication service of the two components, requesting a change of service so that said communication can be continued according to the second communication service of the audio component,
and said method being **characterized in that**,
with the radio network controller (11) of the first subsystem being connected to at least a first core network switch (12) and the radio network controller (21) of the second subsystem being connected to at least a second core network (22) switch, subsequent to informing the first switch of said detection of a communication transfer condition, a request is transmitted for transfer of the communication from the first switch to the second switch, and **in that** the inability of the second subsystem to handle the communication according to the first communication service is indicated to the first switch by a transfer failure message, sent in response to said transmission of the communication transfer request.

2. Method according to claim 1, in which the first subsystem is of third generation and the second subsystem is of second generation.

3. Method according to any of the previous claims, in which the first communication service requires a transmission rate greater than the second communication service.

4. Method according to any of the previous claims, in which each communication service has an associated coding on one section at least of the communication and in which the service change request includes a coding change request on said section of the communication.

5. Method according to claims 4, in which the coding associated with the first communication service is compatible with the H.324 standard.

6. Method according to any of the previous claims, in which the first communication service is a videotelephony service.

7. Method according to any of the previous claims, in which the second communication service is a voice communication service.

8. Method according to claim 7, in which an AMR ("Adaptive Multi Rate") type coding is associated with the second communication service.

9. Method according to any of the claims 1 to 8, in which said transfer failure message is sent to the first core network switch (12) and is relayed to the radio network controller (11) of the first subsystem, and in which the step of informing the first switch of the detection at the radio network controller of the first subsystem of a condition for transfer of the communication to at least one base station (20) of the radio access network of the second subsystem, is repeated so long as a transfer failure message is relayed to the radio network controller (11) of the first subsystem.

10. Method according to any of the previous claims in which, when the second communication service requires a rate strictly lower on a radio part than a maximum rate value authorized by the second subsystem, the additional rate is used to send data through at least said base station (20) of the radio access network of the second subsystem.

11. Method according to any of the previous claims, in which the service change request is sent to the first mobile terminal (1) and to the second terminal (2).

12. Method according to claim 11, in which the service change request is transmitted to the second terminal (2) through at least one switch (13), a radio network controller (14) and a base station (15) with which the second terminal is connected.

13. Method according to any of the previous claims, in which the service change request includes a request for modification of the radio support characteristics of the communication respectively on the first mobile terminal (1) and second terminal (2) side.

14. Core network switch (12) of a telecommunication system also including a first and a second subsystem each comprising a radio access network including base stations (10, 20) and at least one radio network controller (11, 21) connected to at least some of said base stations, at least some of the radio network controllers (11) also being connected at least to said core network switch (12), the first subsystem being adapted to support a first communication service of two components, including at least one audio component and a second communication service of an audio component, and the second subsystem being adapted to support the second communication service, said core network switch (12) including, in relation to a first mobile terminal (1) being in communication with a second terminal (2) according to the first communication service, at least via at least one base station (10) of the radio access network of the first subsystem:
- means for receiving an indication according to which a condition for transfer of the communication to at least one base station (20) of the radio access network of the second subsystem has been detected at the radio network controller (11) of the first subsystem; and
- means, when the second subsystem is not able to handle the communication based on the first communication service of the two components, for requesting a change of service so that said communication can be continued according to the second communication service for the audio component,
said core network switch (12) being **characterized in that**, with the radio network controller (11) of the first subsystem connected at least to said core network switch (12) and the radio network controller (21) of the second subsystem connected to at least a second core network switch (22), it also includes means, as a reaction to receiving an indication according to which a communication transfer condition has been detected, for transmitting a request for transfer of the communication to the second switch (22), and means for deducing the inability of the second subsystem to handle the communication based on the first communication service, from reception of a transfer failure message, in response to said transmission of the communication transfer request.

15. Switch (12) according to claim 14, in which the first subsystem is of third generation, the second subsystem being of second generation.

16. Switch (12) according to any of claims 14 to 15, in which the first communication service requires a transmission rate greater than the second communication service.

17. Switch (12) according to any of claims 14 to 16, in which each communication service has an associated coding on one section at least of the communication and in which the means for requesting a service change include means for requesting a coding change on said section of the communication.

18. Switch (12) according to claim 17, in which the coding associated with the first communication service is compatible with the H.324 standard.

19. Switch (12) according to any of claims 14 to 18, in which the first communication service is a videotelephony service.

20. Switch (12) according to any of claims 14 to 19, in which the second communication service is a voice communication service.

21. Switch (12) according to claim 20, in which an AMR ("Adaptive Multi Rate") type coding is associated with the second communication service.

22. Switch (12) according to any of claims 14 to 21, also including means for relaying said transfer failure message to the radio network controller (11) of the first subsystem.

23. Switch (12) according to any of claims 14 to 22, in which the means for requesting a service change include means for sending a request to change service from the first to the second communication service to the first mobile terminal (1) and to the second terminal (2).

24. Switch (12) according to claim 23, in which the means for transmitting a service change request to the second terminal (2) are implemented through at least one switch (13), a radio network controller (14) and a base station (15) with which the second terminal (2) is connected.

25. Switch (12) according to any of claims 14 to 24, in which the means for requesting a service change include means for requesting a modification of characteristics of at least one radio support of the communication.

## Patentansprüche

1. Verfahren zur Steuerung von Kommunikationsdiensten in einem Telekommunikationssystem bestehend aus einem ersten und einem zweiten Subsystem mit jeweils einem Funkzugangsnetz, umfassend Basisstationen (10, 20) und mindestens einen Funknetz-Controller (11, 21), welcher an zumindest bestimmte der besagten Basisstationen und mindestens eine Schalteinrichtung (12, 22) des Kernnetzwerks angeschlossen sind,
wobei das erste Subsystem dazu ausgelegt ist, einen ersten Kommunikationsdienst zweier Komponenten, darunter mindestens eine Audio-Komponente, und einen zweiten Kommunikationsdienst einer Audio-Komponente zu unterstützen, und das zweite Subsystem dazu ausgelegt ist, einen zweiten Kommunikationsdienst zu unterstützen, wobei das besagte Verfahren in Bezug auf ein erstes Mobilendgerät (1), welches über mindestens eine Basisstation (10) des Funkzugangsnetzes des ersten Subsystems in einer bestehenden Verbindung mit einem zweiten Endgerät (2) gemäß dem ersten Kommunikationsdienst steht, die folgenden Schritte umfasst:
- Erkennen, am Funknetz-Controller (11) des ersten Subsystems, einer Bedingung für die Weiterleitung der Verbindung an mindestens eine Basisstation (20) des Funkzugangsnetzes des zweiten Subsystems;
- Informieren der Schalteinrichtung (12) des Kernnetzwerks, an welches der Funknetz-Controller (11) des ersten Subsystems angeschlossen ist, über das besagte Erkennen einer Bedingung für die Weiterleitung der Verbindung;
- wenn das zweite Subsystem nicht für die Verarbeitung der Verbindung gemäß dem ersten Kommunikationsdienst der beiden Komponenten ausgelegt ist, Auffordern zum Wechseln des Dienstes, so dass die besagte Verbindung gemäß dem zweiten Kommunikationsdienst für die Audio-Komponente fortgesetzt wird,
und wobei das besagte Verfahren **dadurch gekennzeichnet ist, dass** der Funknetz-Controller (11) des ersten Subsystems an mindestens eine erste Schalteinrichtung (12) des Kernnetzwerks und der Funknetz-Controller (21) des zweiten Subsystems an mindestens eine zweite Schalteinrichtung (22) des Kernnetzwerks angeschlossen ist, dass man, nachdem die erste Schalteinrichtung von dem besagten Erkennen einer Bedingung für die Weiterleitung der Verbindung informiert wurde, eine Aufforderung zur Weiterleitung der Verbindung von der ersten Schalteinrichtung an die zweite Schalteinrichtung sendet, und dass der ersten Schalteinrichtung die Unfähigkeit des zweiten Subsystems, die Verbindung gemäß dem ersten Kommunikationsdienst zu verarbeiten, in einer in Antwort auf die besagte Übertragung der Aufforderung zur Weiterleitung der Verbindung gesendete Weiterleitungs-Fehlermeldung mitgeteilt wird.

2. Verfahren nach Anspruch 1, wobei das erste Subsystem der dritten Generation und das zweite Subsystem der zweiten Generation angehören.

3. Verfahren nach einem beliebigen der vorstehenden Ansprüche, wobei der erste Kommunikationsdienst eine höhere Übertragungsrate als der zweite Kommunikationsdienst erfordert.

4. Verfahren nach einem beliebigen der vorstehenden Ansprüche, wobei jedem Kommunikationsdienst eine Codierung auf zumindestens einem Abschnitt der Verbindung zugeordnet ist, und wobei die Aufforderung zum Wechseln des Dienstes eine Anforderung für die Änderung der Codierung auf dem besagten Abschnitt der Verbindung umfasst.

5. Verfahren nach Anspruch 4, wobei die dem ersten Kommunikationsdienst zugeordnete Codierung mit dem H.234-Standard kompatibel ist.

6. Verfahren nach einem beliebigen der vorstehenden Ansprüche, wobei der erste Kommunikationsdienst ein Videotelefoniedienst ist.

7. Verfahren nach einem beliebigen der vorstehenden Ansprüche, wobei der zweite Kommunikationsdienst ein Sprachkommunikationsdienst ist.

8. Verfahren nach Anspruch 7, wobei dem zweiten Kommunikationsdienst eine Codierung vom Typ AMR ("Adaptive Multi Rate") zugeordnet ist.

9. Verfahren nach einem beliebigen der Ansprüche 1 bis 8, wobei die besagte Weiterleitungs-Fehlermeldung an die erste Schalteinrichtung (12) des Kernnetzwerks gesendet und an den Funknetz-Controller (11) des ersten Subsystems weitergeleitet wird, und wobei der Schritt des Informierens der ersten Schalteinrichtung über das Erkennen, am Funknetz-Controller des ersten Subsystems, einer Bedingung für die Weiterleitung der Verbindung an mindestens eine Basisstation (20) des Funkzugangsnetzes des zweiten Subsystems so lange wiederholt wird, wie eine Weiterleitungs-Fehlermeidung an den Funknetz-Controller (11) des ersten Subsystems gesendet wird.

10. Verfahren nach einem beliebigen der vorstehenden Ansprüche, wobei man, wenn der zweite Kommunikationsdienst eine Übertragungsrate erfordert, welche bedeutend unter einem von dem zweiten Subsystem zugelassenen maximalen Übertragungsratenwert liegt, die zusätzliche Übertragungsrate für die Übertragung von Daten über mindestens die besagte Basisstation (20) des Funkzugangsnetzes des zweiten Subsystems verwendet.

11. Verfahren nach einem beliebigen der vorstehenden Ansprüche, wobei die Aufforderung zum Wechseln des Dienstes an das erste Mobilendgerät (1) und an das zweite Mobilendgerät (2) gesendet wird.

12. Verfahren nach Anspruch 11, wobei die Aufforderung zum Wechseln des Dienstes über mindestens eine Schalteinrichtung (13), einen Funknetz-Controller (14) und eine Basisstation (15), mit welcher das zweite Endgerät in Verbindung steht, an das zweite Endgerät (2) übertragen wird.

13. Verfahren nach einem beliebigen der vorstehenden Ansprüche, wobei die Aufforderung zum Wechseln des Dienstes eine Anforderung für die Änderung der Eigenschaften der Funkträger der Verbindung sowohl an der Seite des ersten Mobilendgeräts (1) als auch des zweiten Endgeräts (2) umfasst.

14. Schalteinrichtung (12) des Kernnetzwerks eines Kommunikationssystems, weiterhin umfassend ein erstes und ein zweites Subsystems mit jeweils einem Funkzugangsnetz, welches Basisstationen (10, 20) und mindestens einen an zumindest bestimmte der besagten Basisstationen angeschlossenen Funknetz-Controller (11, 21) umfasst, wobei zumindest bestimmte der Funknetz-Controller (11) weiterhin zumindest an die besagte Schalteinrichtung (12) des Kernnetzwerks angeschlossen sind, wobei das erste Subsystem dazu ausgelegt ist, einen ersten Kommunikationsdienst zweier Komponenten, darunter mindestens eine Audio-Komponente, und einen zweiten Kommunikationsdienst einer Audio-Komponente zu unterstützen, und das zweite Subsystem dazu ausgelegt ist, den zweiten Kommunikationsdienst zu unterstützen, wobei die besagte Schalteinrichtung (12) des Kernnetzwerks in Bezug auf ein erstes Mobilendgerät (1), welches zumindest über mindestens eine Basisstation (10) des Funkzugangsnetzes des ersten Subsystems in einer bestehenden Verbindung mit einem zweiten Endgerät (2) gemäß dem ersten Kommunikationsdienst steht, umfasst:
- Mittel zum Empfangen einer Angabe, dass eine Bedingung für die Weiterleitung der Verbindung an mindestens eine Basisstation (20) des Funkzugangsnetzes des zweiten Subsystems am Funknetz-Controller (11) des ersten Subsystems erkannt wurde;
- Mittel zum Anfordern, wenn das zweite Subsystem nicht für die Verarbeitung der Verbindung gemäß dem ersten Kommunikationsdienst der beiden Komponenten ausgelegt ist, eines Dienstwechsels, so dass die besagte Verbindung gemäß dem zweiten Kommunikationsdienst für die Audio-Komponente fortgesetzt wird,
wobei die Schalteinrichtung (12) des Kernnetzwerks **dadurch gekennzeichnet ist, dass** der Funknetz-Controller (11) des ersten Subsystems mindestens an die besagte Schalteinrichtung (12) des Kernnetzwerks und der Funknetz-Controller (21) des zweiten Subsystems mindestens an eine zweite Schalteinrichtung (22) des Kernnetzwerks angeschlossen ist, wobei sie weiterhin Mittel umfasst, um in Antwort auf den Empfang einer Angabe, dass eine Bedingung für die Weiterleitung der Verbindung erkannt wurde, eine Aufforderung zur Weiterleitung der Verbindung an die zweite Schalteinrichtung (22) zu senden, sowie Mittel, um aus dem Empfang einer Weiterleitungs-Fehlermeldung in Antwort auf die besagte Übertragung der Aufforderung zur Weiterleitung der Verbindung die Unfähigkeit des zweiten Subsystems, die Verbindung gemäß dem ersten Kommunikationsdienst zu verarbeiten, abzuleiten.

15. Schalteinrichtung (12) nach Anspruch 14, wobei das erste Subsystem der dritten Generation und das zweite Subsystem der zweiten Generation angehören.

16. Schalteinrichtung (12) nach einem beliebigen der Ansprüche 14 bis 15, wobei der erste Kommunikationsdienst eine höhere Übertragungsrate als der zweite Kommunikationsdienst erfordert.

17. Schalteinrichtung (12) nach einem beliebigen der Ansprüche 14 bis 16, wobei jedem Kommunikationsdienst eine Codierung auf zumindestens einem Abschnitt der Verbindung zugeordnet ist, und wobei die Mittel zum Anfordern eines Dienstwechsels Mittel zum Anfordern einer Änderung der Codierung auf dem besagten Abschnitt der Verbindung umfassen.

18. Schalteinrichtung (12) nach Anspruch 17, wobei die dem ersten Kommunikationsdienst zugeordnete Codierung mit dem H.234-Standard kompatibel ist.

19. Schalteinrichtung (12) nach einem beliebigen der Ansprüche 14 bis 18, wobei der erste Kommunikationsdienst ein Videotelefoniedienst ist.

20. Schalteinrichtung (12) nach einem beliebigen der Ansprüche 14 bis 19, wobei der zweite Kommunikationsdienst ein Sprachkommunikationsdienst ist.

21. Schalteinrichtung (12) nach Anspruch 20, wobei dem zweiten Kommunikationsdienst eine Codierung vom Typ AMR ("Adaptive Multi Rate") zugeordnet ist.

22. Schalteinrichtung (12) nach einem beliebigen der Ansprüche 14 bis 21, weiterhin umfassend Mittel zum Übertragen der besagten Weiterleitungs-Fehlermeldung an den Funknetz-Controller (11) des ersten Subsystems.

23. Schalteinrichtung (12) nach einem beliebigen der Ansprüche 14 bis 22, wobei die Mittel zum Anfordern eines Wechsels des Dienstes Mittel zum Übertragen einer Aufforderung zum Wechseln des Dienstes vom ersten auf den zweiten Kommunikationsdienst vom ersten Mobilendgerät (1) an das zweite Endgerät (2) umfassen.

24. Schalteinrichtung (12) nach Anspruch 23, wobei die Mittel zum Übertragen einer Aufforderung zum Wechseln des Dienstes an das zweite Endgerät (2) über mindestens eine Schalteinrichtung (13), einen Funknetz-Controller (14) und eine Basisstation (15), mit welcher das zweite Endgerät (2) in Verbindung steht, eingesetzt werden.

25. Schalteinrichtung (12) nach einem beliebigen der Ansprüche 14 bis 24, wobei die Mittel zum Anfordern eines Wechsels des Dienstes Mittel zum Anfordern einer Änderung der Eigenschaft mindestens eines Funkträgers der Verbindung umfassen.
